# EUROPEAN PATENT SPECIFICATION

(11) **EP 0 449 660 B1**
(45) Date of publication and mention of the grant of the patent: **08.05.1996**
(21) Application number: 91302831.2
(22) Date of filing: 28.03.1991
(51) Int. Cl.: G06F 11/14

(54) **A method and apparatus of generating shadow process**
Verfahren und Gerät zur Schattenprozessgenerierung
Procédé et appareil de génération d'un processus de recopie

(30) Priority: 29.03.1990 JP 78857/90
(43) Date of publication of application: 02.10.1991
(73) Proprietor: KABUSHIKI KAISHA TOSHIBA, Kawasaki-shi, Kanagawa-ken 210 (JP)
(72) Inventor: Kanai, Tatsunori, c/o Intellectual Property Div., Minato-ku, Tokyo (JP); Yoshimura, Masahiko, c/o Intellectual Property Div, Minato-ku, Tokyo (JP)
(74) Representative: BATCHELLOR, KIRK & CO.

(56) References cited:
- EP-A- 0 221 274
- EP-A- 0 409 604
- WO-A-86/00439

## Description

The present invention relates to a method and apparatus for generating a shadow-process in a faulttolerant multi-computer system.

Recently an information system, which is composed of multiple computers and a database, has been developed. The database is typically stored in a mass storage device, such as a hard disk. A first component executes a process of an application program and an operating system. The application program may be, for example, a banking program, or an airline reservation program. The operating system provides the application program with services for manipulating computer system resources such as mass storage and input/output (I/O) devices. In particular, the operating system reads data from the database and writes data to the database in response to requests from the application programs.

If the application program issues a write request to the database and a "crash", that is, a malfunction, subsequently occurs during execution of the application program, the database remains in a partially updated condition, as commanded by the write request. However, following the crash the computer is restarted and executes the application program from the beginning. Therefore, the content of the database does not coincide with the data which is necessary at the beginning or execution of the application program. In the same way, if the application program includes a request for a second computer to execute a processing operation which the first computer cannot execute (called "remote execution"), the second computer may write the result to the database. In this case, if the second computer crashes, the same inconvenience occurs.

Accordingly, a process duplication method (called replication) is adopted for increasing reliability. The process of an application program being generated by replication is called a "shadow-process", and the original process which generates the shadow-process is called the "real-process".

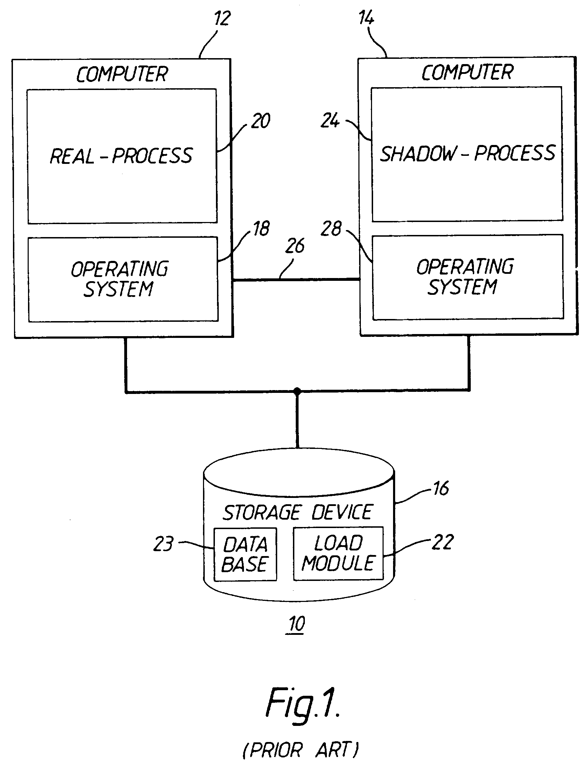

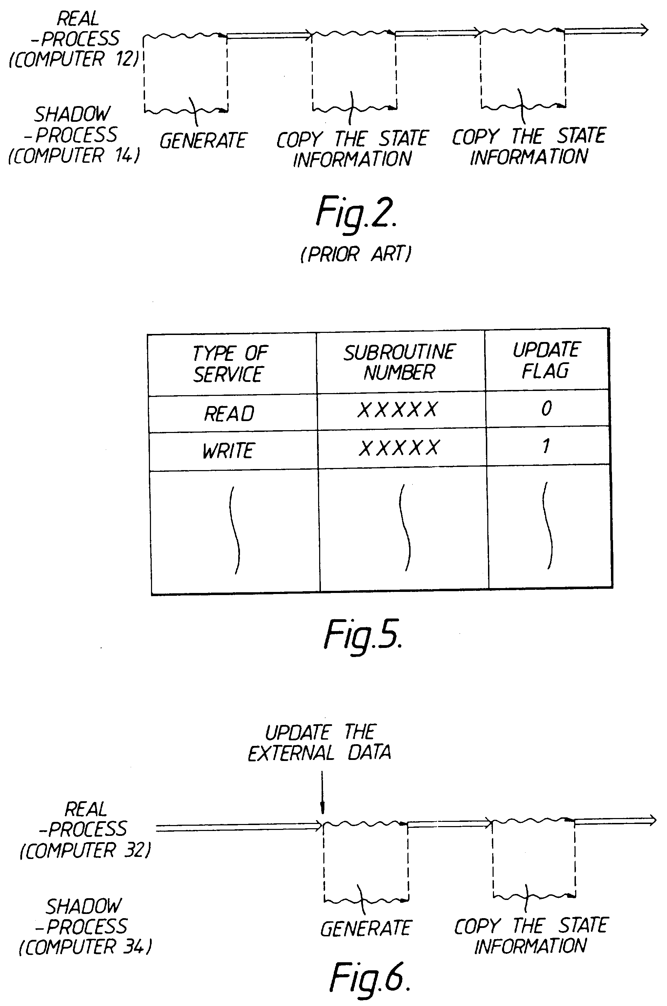

Figure 1 shows a block diagram of a multi-computer system 10 for replication according to the prior art, and Figure 2 shows a time chart for generating the shadow-process according to the prior art. As shown in Figure 1, the components of multi-computer system 10 include computers 12, 14 and storage device 16. When computer 12 is commanded to begin execution of a new application program, an operating system 18 generates a new real-process 20 in computer 12 from a load-module 22 in storage device 16. As is well known to those skilled in the art, operating system 18 comprises a set of computer instructions which control the overall behaviour of the computer system, including the loading of application programs, the spawning of processes and the handling of requests for service by process of an application program to input/output devices of the system.

Load module 22 is comprised of program code and necessary data for the application program to be executed by computers 12 and 14.

Real-process 20 consists of a new application program to be executed by computer 12. As real-process 20 is executed, it generates request for service by operating system 18. When real-process 20 is generated, operating system 18 also generates a shadow-process 24 in computer 14 through a communication line 26.

Shadow-process 24 is a copy of real-process 20. In a normal situation, real-process 20 in computer 12 is executed. As shown in Figure 2, computer 12 copies state information (defining the status of execution by real-process 20) to computer 14 through communication line 26 at predetermined intervals. The state information includes an execute line number of real-process 20 and the current results of execution of real-process 20. In other words, synchronization of computers 12 and 14 is executed to cause the execution state of computer 14 to coincide with the state of computer 12. Therefore, when real-process 20 crashes, shadow-process 24 begins execution from the latest synchronization point. In short, computer 14 executes shadow-process 24 according to the latest execute line number and the latest execute result.

If real-process 20 does not update the data outside the real-process (i.e. issue a write request to the database 23 in storage device 16), the problem of an inconsistent status following a crash does not occur. For example, if real-process 20 is a program issuing only read instructions from the database and send their result to the display device (not shown), database is not altered just prior to a crash. Accordingly, it is not necessary for shadow-process 24 to continue execution of real-process 20 even if real-process 20 crashes. However, according to prior methods of generating the shadow-process, the shadow-process is always generated at the same time that the realprocess is generated. In short, the shadow-process is generated, even though it is not necessary for continued execution of real-process 20 following a crash. Therefore, unnecessary system resources are consumed by generating the shadow-process. Moreover the time of the synchronization between the real-process and the shadow-process is wasted.

Accordingly, the present invention seeks to provide a method and apparatus for generating a shadow-process in which system resources are conserved by avoiding the generation of unnecessary shadow-processes.

The present invention also seeks to provide a method and apparatus of generating a shadow-process in which the time for synchronization operation between a real-process and the shadow process is not wasted.

Accordingly, the present invention provides a a process duplication method in a computer system having a plurality of components including multiple computers and a common storage device, the method comprising the steps of:
generating the real-process only;
when a request for service is issued from a real-process of a first of the computers to an operating system of the first computer;
deciding if the request for service is an instruction to alter the status of a system component outside the real-process;
if it is an instruction to alter the status of a system component outside the real-process, examining whether a shadow-process was previously generated during execution of the real-process;
and generating the shadow-process of the real-process in a second of the computers if the shadow-process was not already generated;
after the generation of the shadow-process, copying at predetermined intervals the state information of the real-process from the first computer to the second computer executing the shadow-process.

For example the request might be for service to update the external data of real-process (i.e. update database in a storage device) or a service to remotely execute an operation on another computer. If the service is such an update instruction or remote execution, it is examined to determine if the shadow-process has already been generated during execution of the real-process. If the shadow-process was not already generated, the operating system generates the shadow-process in another computer. Therefore, system resources are not unnecessarily consumed in comparison with the method of generating the shadow-process whenever the real-process is generated. Moreover, because synchronization is not necessary from the generation time of the real-process to the generation time of the shadow-process, the overhead synchronization is reduced in comparison with prior art methods.

One embodiment of the invention will now be described by way of example with reference to the accompanying drawings in which:
Figure 1 shows a block diagram of a fault-tolerant multi-computer system according to the prior art;
Figure 2 shows a time chart of generating the shadow-process according to the prior art;
Figure 3 shows a block diagram of a fault tolerant multi-computer system constituting a preferred embodiment of the present invention;
Figure 4 shows a flow chart of the process for generating the shadow-process in the multi-computer system of Figure 3;
Figure 5 shows the content of a service table of the operating system on the multi-computer system of Figure 3; and
Figure 6 shows a time chart of generating a shadow-process in the multi-computer system of Figure 3; and
Figure 7 shows a block diagram of fault tolerant multi-computer system constituting another preferred embodiment of the present invention.

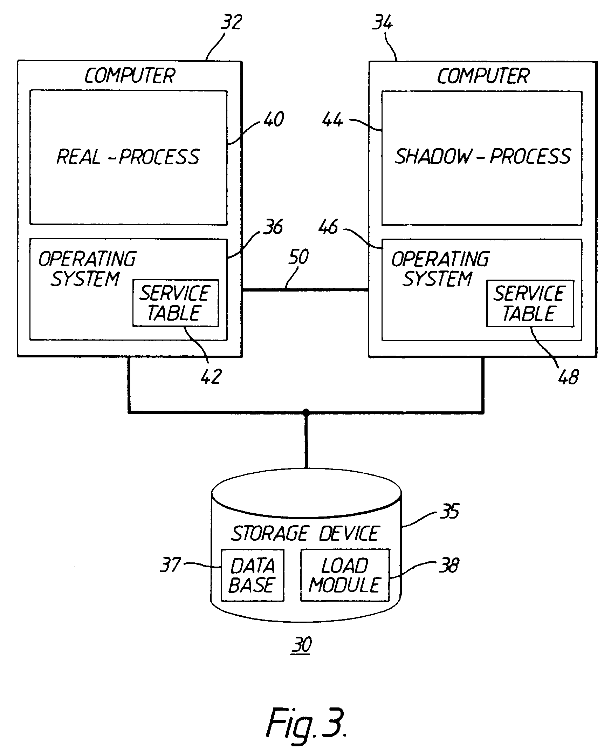

Referring first to Figure 3, system 30 comprises system components including components 32, 34 and a storage device 35, such as a hard disk. Computers 32 and 34 may be, for example, a Nixdorf Computer (Targon/32), and storage device 35 stores database 37, load-module 38 and other files (not shown). System 30 typically includes additional computers, not shown, which may be identical to computers 32 and 34.

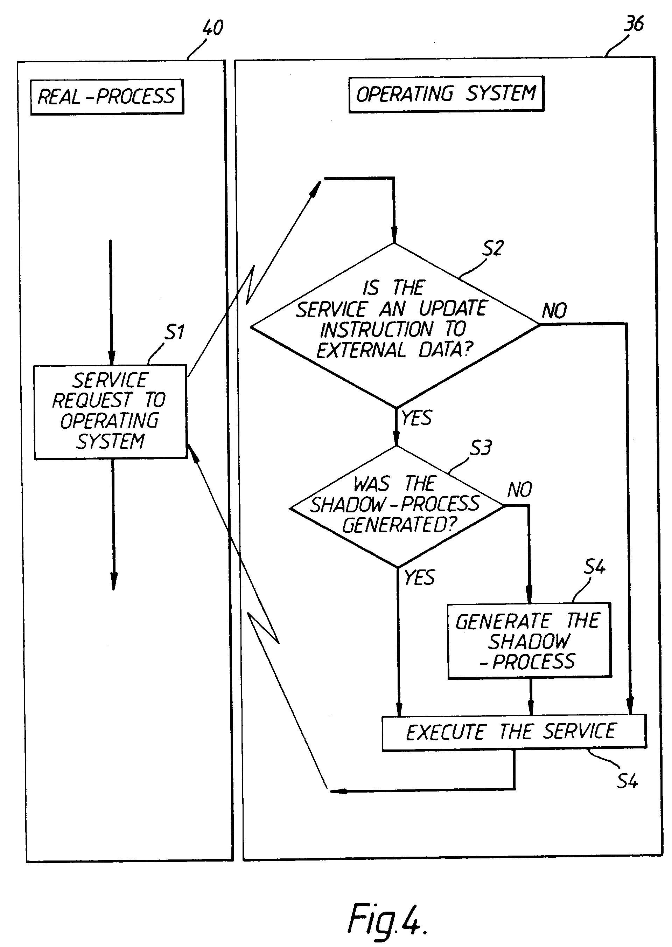

When computer 32 begins executing a new application, an operating system 36 retrieves a corresponding program from a load module 38 in storage device 35. Operating system 36 generates a real-process 40 according to the program stored in the load module. Real-process 40 is executed, and requests service by operating system 36 (step S1 Figure 4). A request for service may constitute a data transfer by instructions to access database 37 through operating system 36. When operating system 36 is requested to provide service by real-process 40, operating system 36 decides if the service consists of an alteration of the status of a system component outside the real-process 40, such as a write instruction to external data, that is, database 37, by referring to a service table 42 (step S2),

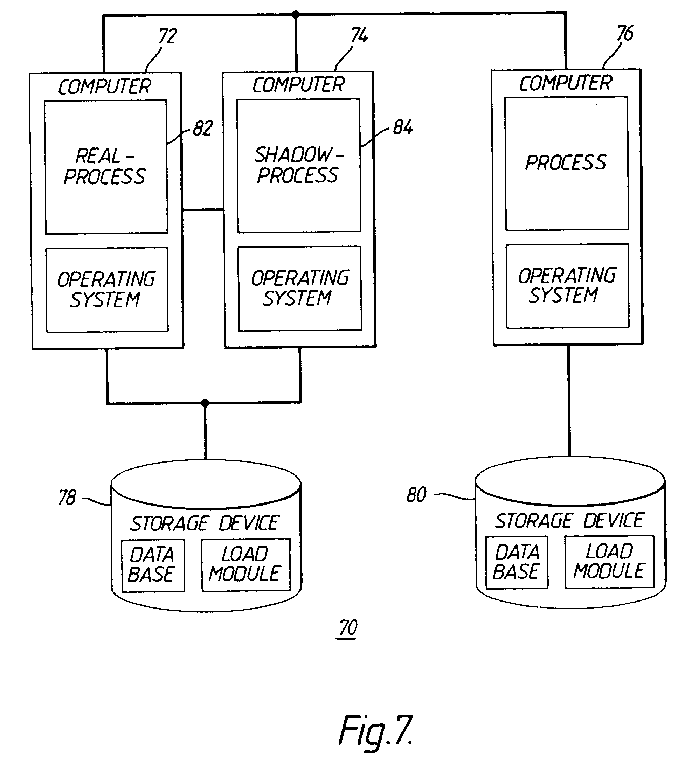

Figure 5 shows the content of service table 42. As shown in Figure 5, service table 42 stores a list of entries of the kind of service which the operating system offers to application programs. Each entry includes a flag which designates whether the corresponding service consists of a write instruction which updates the external data. Therefore, operating system 36 is capable of deciding if the requested service is a write instruction to update the external data according to the service table 42.

When the operating system 36 decides that the service is such a write instruction, the operating system examines if a shadow-process 44 corresponding to real-process 40 was previously generated in computer 34 (step S3). If shadow-process 44 was not previously generated, operating system 36 sends the generation request to an operating system 46 through the communication line 50. Operating system 46 then generates shadow-process 44 in the computer 34 (step S4). Shadow-process 44 is a copy of real-process 40 and includes the execute result of real-process 40 at that time.

After generating shadow-process 44 (or if shadow-process 44 was already generated), operating system 36 executes the requested service and sends the execution result to real-process 40 (step S5). Operating system 36 then copies the state information to computer 34 at predetermined intervals. The state information includes the program execute line number of real-process 40 and the results of execution at that time. Therefore, if real-process 40 crashes, shadow-process 44 begins executing according to the latest execute line number and the results of execution at that time.

Figure 6 shows a time chart for generating the shadow-process 44 according to the present invention. As shown in Figure 6, when real-process 44 requests the service which performs updating of external data, shadow-process 44 is generated in the computer 34. After shadow-process 44 is generated, the state information is copied at predetermined intervals. Therefore, if real-process 40 does not request the service of updating the external data at all, the real-process 40 finishes execution without generating the shadow-process 44. In short, by not unnecessarily generating the shadow-process 44, system processing resources are not wasted. Moreover, because synchronization is not necessary from the generation time of the real-process to the generation time of the shadow-process, the overhead of the synchronization is reduced.

At step S2 of Figure 4, it may also be decided if the requested service is a different type of request for alteration of the status of a system component, such as a request for another computer to execute. Figure 7 shows a block diagram of fault tolerant multi-computer system constituting another preferred embodiment of the invention. System 70 comprises computers 72, 74, 76 and storage devices 78, 80. Computers 72, 74 and storage device 78 corresponds to system 30 as shown in Figure 3. In Figure 7, if the real-process of the computer 72 requests the computer 76 to execute a processing operation which the computer 72 cannot execute (i.e. if the computer 72 requests remote execution to the computer 76) the computer 76 may update the execution result to external data, such as database, in the storage device 80. In this case, if the computer 72 crashes during such execution, the same problem of inconsistent data can occur as when the computer 72 crashes following an update to external data in the storage device 78. Therefore, when real-process 82 in the computer 72 requests the remote execution to the computer 76, the shadow-process 84 is generated in the computer 74.

In Figure 4, after it is decided if the service is an update instruction to external data of the real-process at step S2, it is determined if the shadow-process was already generated at step S3. However, this order may be reversed, such as that after it is determined if the shadow-process was already generated, it may be decided if the service is the update instruction to external data of the real-process.

In Figure 4, after generating the shadow-process at step S4, the requested service is executed at step S5. However, the shadow-process may also be generated after the requested service is executed.

It will be apparent to those skilled in the art that various modifications and variations can be made in the methods and apparatus disclosed herein without departing from the scope of the appended claims.

## Claims

1. A process duplication method in a computer system (30) having a plurality of components including multiple computers (32, 34) and a common storage device (35), the method comprising the steps of:
generating the real-process only;
when a request for service is issued from a real-process (40) of a first of the computers to an operating system (36) of the first computer (32);
deciding if the request for service is an instruction to alter the status of a system component outside the real-process (40);
if it is an instruction to alter the status of a system component outside the real-process, examining whether a shadow-process (44) was previously generated during execution of the real-process (40);
and generating the shadow-process (44) of the real-process in a second of the computers if the shadow-process was not already generated;
after the generation of the shadow-process, copying at predetermined intervals the state information of the real-process (40) from the first computer (32) to the second computer (34) executing the shadow-process (44).

2. A method according to claim 1 further comprising the step of:
executing the requested service after the shadow-process (44) is generated.

3. A method according to any claim 1 or claim 2 wherein the deciding step includes the step of:
deciding if the requested service is an instruction to update external data stored in the storage device (35), of the real-process (40).

4. A method according to claim 1 or claim 2, wherein the deciding step includes the steps of:
deciding if the requested service is a request for remote execution of another computer.

5. A method according to claim 1 or claim 2, wherein the deciding step includes the steps of:
comparing the requested service to entries of a service table (42) containing data specifying which of a plurality of kinds of service constitute an instruction to alter the status of a system component outside the real-process (40); and
thereby deciding if the required service is an instruction to alter the status of a system component outside the real-process (40).

6. A method according to claim 1, further comprising the step of:
initiating execution of the shadow-process (44) according to the copied state information when it is impossible for the first computer (32) to execute the real-process (40).

7. An apparatus for processing duplication in a computer system (30) having a plurality of components including multiple computers (32, 34) and a common storage device (35), comprising:
first computer means (32) for executing a real-process (40) and an operating system (36), execution of the real-process including the steps of generating the real-process only, generating a request for service from the operating system, and deciding whether the request for service is an instruction to alter the status of a system component outside the real-process; and
second computer means (34) for generating a shadow-process (44) of th real-process (40) in accordance with an instruction of the first computer means (32), only when the requested service is an instruction to alter the status of a system component outside the real-process and the shadow-process was not already generated;
wherein the first computer means (32) copies at a predetermined intervals the state information of the real-process (40) to the second computer means (34) executing the shadow-process (44) after the generation of the shadow-process.

## Patentansprüche

1. Prozeßduplizierverfahren in einem Rechnersystem (30) mit einer Mehrzahl Komponenten, einschließlich mehrerer Rechner (32, 34) und einer gemeinsamen Speichereinheit (35), wobei das Verfahren die Schritte aufweist:
Erzeugen nur des realen Prozesses;
wenn eine Serviceanforderung durch einen realen Prozeß (40) eines der ersten Rechner an ein Betriebssystem (36) des ersten Rechners (32) ausgegeben ist,
Entscheiden, ob die Serviceanforderung eine Anweisung zur Änderung des Zustands einer Systemkomponente außerhalb des realen Prozesses (40) ist;
wenn sie eine Anweisung zur Änderung des Zustands einer Systemkomponente außerhalb des realen Prozesses ist, Untersuchen, ob vorher ein Schattenprozeß (44) während der Ausführung des realen Prozesses (40) erzeugt wurde;
und Erzeugen des Schattenprozesses (44) des realen Prozesses in einem zweiten Rechner, wenn der Schattenprozeß noch nicht erzeugt wurde;
nach dem Erzeugen des Schattenprozesses, Kopieren der Zustandsinformation des realen Prozesses (40) in festgelegten Intervallen von dem ersten Rechner (32) in den zweiten Rechner (34), der den Schattenprozeß (44) ausführt.

2. Verfahren nach Anspruch 1, weiterhin mit dem Schritt:
Ausführen der angeforderten Servicefunktion, nachdem der Schattenprozeß (44) erzeugt ist.

3. Verfahren nach Anspruch 1 oder 2, wobei der Entscheidungsschritt den Schritt aufweist:
Entscheiden, ob die angeforderte Servicefunktion eine Anweisung zur Aktualisierung externer Daten des realen Prozesses (40) ist, die in der Speichereinheit (35) gespeichert sind.

4. Verfahren nach Anspruch 1 oder 2, wobei der Entscheidungsschritt den Schritt aufweist:
Entscheiden, ob die angeforderte Servicefunktion eine Anforderung zum ferngesteuerten Betreiben anderer Rechner ist.

5. Verfahren nach Anspruch 1 oder 2, wobei der Entscheidungsschritt den Schritt aufweist:
Vergleichen der angeforderten Servicefunktion mit Einträgen einer Servicetabelle (42) mit Daten, die festlegen, welche von mehreren Servicearten eine Anweisung zur Änderung des Zustands einer Sytemkomponente außerhalb des realen Prozesses (40) darstellt; und
dadurch Entscheiden, ob die angeforderte Servicefunktion eine Anweisung zur Änderung des Zustands einer Systemkomponente außerhalb des realen Prozesses (40) ist.

6. Verfahren nach Anspruch 1, weiterhin mit dem Schritt:
Einleiten der Ausführung des Schattenprozesses (44) entsprechend der kopierten Zustandsinformation, wenn es für den ersten Rechner (32) unmöglich ist, den realen Prozeß (40) auszuführen.

7. Vorrichtung zur Prozeßduplizierung in einem Rechnersystem (30) mit einer Mehrzahl von Komponenten, einschließlich mehrerer Rechner (32, 34) und einer gemeinsamen Speichereinheit (35), mit:
ersten Rechnermitteln (32) zum Ausführen eines realen Prozesses (40) und eines Betriebssystems (36), wobei die Ausführung des realen Prozesses die Schritte der Erzeugung nur des realen Prozesses, der Erzeugung einer Serviceanforderung durch das Betriebssystem und der Entscheidung einschließt, ob die Serviceanforderung eine Anweisung zur Änderung des Zustands von Systemkomponenten außerhalb des realen Prozesses ist; und
zweiten Rechnermitteln (34) zur Erzeugung eines Schattenprozesses (44) des realen Prozesses (40) entsprechend einer Anweisung der ersten Rechnermittel (32) nur dann, wenn die Serviceanforderung eine Anweisung zur Änderung des Zustands einer Systemkomponente außerhalb des realen Prozesses ist und der Schattenprozeß noch nicht erzeugt wurde;
wobei die ersten Rechnermittel (32) nach der Erzeugung des Schattenprozesses in festgelegten Intervallen die Zustandsinformation des realen Prozesses (40) von den ersten Rechnermitteln (32) in die zweiten Rechnermittel (34), die den Schattenprozeß (44) ausführen, kopieren.

## Revendications

1. Méthode de copiage sur un système d'ordinateurs (30) ayant une pluralité de composantes constituées par des ordinateurs multiples (32, 34) et un dispositif commun de mémoire de masse (35), la méthode en question comprenant les phases suivantes:-
génération d'un traitement réel uniquement;
lorsqu'une demande de service est initiée par un traitement réel (40) exécuté par un premier ordinateur parmi les ordinateurs multiples et transmise au système d'exploitation (36) de ce premier ordinateur (32) ;
décision pour déterminer si la demande de service est une instrcution de modification de l'état d'une composante dy système à l'extérieur du traitement réel (40) ;
s'il s'agit d'une instruction de modification du statut d'une composante du système à l'extérieur du traitement réel, vérifier qu'un traitement fantôme (44) a été effectué précédemment pendant l'exécution du traitement réel (40) ;
et génération du traitement-fantôme (44) du traitement réel dans un second ordinateur des ordinateurs multiples si le traitement fantôme n'a pas encore été généré;
après génération du traitement fantôme copiage à des intervalles prédéterminés de l'information d'état du traitement réel (40) du premier ordinateur (32) dans le second ordinateur (34) qui exécute le traitement fantôme (44).

2. Méthode selon la revendication 1 qui comprend en outre une phase:-
d'exécution du service demandé après génération du traitement fantôme (44).

3. Méthode selon la revendication 1 ou la revendication 2, dans laquelle la phase décisive comporte une étape de:-
décision pour déterminer si la demande de service est une instruction de mise à jour de données extérieures stockées dans le dispositif de stockage (35), du traitement réel (40).

4. Méthode selon la revendication 1 ou la revendication 2, dans laquelle la phase de décision comporte les étapes suivantes:-
décision pour déterminer si le service demandé est une demande d'exécution à distance par un autre ordinateur.

5. Méthode selon la revendication 1 ou la revendication 2, dans laquelle l'étape d décision comporte les étapes suivantes:-
comparaison entre le service demandé et les incluses dans une table de service (42) contenant des informations spécifiant laquelle des pluralités de catégories de services constitue une instruction de modification de la composante du système à l'extérieur du traitement réel (40); et
par conséquent de décider si le service demandé est une instruction de modification de l'état de la composante du système à l'extérieur du traitement réel (40).

6. Méthode selon la revendication 1, comprenant en outre l'étape:-
d'initiation de l'exécution du traitement fantôme (44) en fonction des informations d'état copiées lorsqu'il est impossible au premier ordinateur (32) d'exécuter le traitement réel (40).

7. Appareil permettant d'exécuter un processus de copiage dans un systèmes d'ordinateurs (30) ayant une pluralité de composantes constituée par des ordinateurs multiples (32, 34) et un dispositif de mémoire de masse commun (35) comprenant:-
un moyen à premier ordinateur (32) pour exécuter un traitement réel (40) et un système d'exploitation (36), l'exécution du traitement réel comprenant les étapes de génération du traitement réel uniquement, génération d'une demande de service par le système d'exploitation, et décision pour déterminer si cette demande de service est une instruction de modification de l'état d'une composante du système à l'extérieur du traitement réel; et
un moyen à second ordinateur (34) pour exécuter un traitement fantôme (44) du traitement réel (40) d'après une instruction transmise par le moyen à premier ordinateur (32), uniquement lorsque la demande de service est une instruction de modification d'état de la composante du système à l'extérieur du traitement réel si le traitement fantôme n'a pas déjà été généré;
dans lequel appareil le moyen à premier ordinateur (32) copie à des intervalles prédéterminés les informations d'état du traitement réel (40) dans le moyen à second ordinateur (34) qui exécute le traitement fantôme (44) après génération du traitement fantôme.
